# EUROPEAN PATENT SPECIFICATION

(11) **EP 1 339 291 B1**
(45) Date of publication and mention of the grant of the patent: **11.04.2007**
(21) Application number: 01998233.9
(22) Date of filing: 01.11.2001
(51) Int. Cl.: A23G 9/28, A23G 9/24, A21D 13/08, A23L 1/164, A23L 1/176, A21D 13/00

(54) **EXTRUDED ICE BISCUIT AND COMPOSITE FORZEN CONFECTIONS**
EXTRUDIERTER EISKEKS SOWIE ZUSAMMENGESETZTES EISKONFEKT
BISCUIT GLACE EXTRUDE ET CONFISERIES GLACEES COMPOSEES

(30) Priority: 30.11.2000 CL 32892000
(43) Date of publication of application: 03.09.2003
(73) Proprietor: SOCIETE DES PRODUITS NESTLE S.A., 1800 Vevey (CH)
(72) Inventor: ROSENDE SAAVEDRA, Manuel, Humberto, La Florida, CL-Santiago (CL)
(74) Representative: Elleby, Gudrun
(86) International application number: PCT/EP2001/012726
(87) International publication number: WO 2002/043505

(56) References cited:
- EP-A- 0 329 219
- EP-A- 0 653 285
- WO-A-00/60959
- US-A- 2 271 767
- US-A- 3 481 282
- US-A- 3 492 951
- US-A- 4 786 243
- US-A- 4 913 645
- US-A- 5 378 483
- US-A- 5 425 958
- US-A- 5 603 965

## Description

### Background of the invention

The present invention is concerned with a biscuit, a process for its preparation and composite frozen confections containing it.

In the field of ice confectionery there is a need to procuring new eating experiences and new textures. Particularly attrative is the contrast of texture between a soft aerated ice confectionery and crispy inclusions or layers.

In U.S. Pat. No. 4,542,028, composite ice confection cakes comprising a multiplicity of superimposed successive thin layers of ice cream separated by interleaved very thin chocolate layers are made by successively extruding ice cream ribbons through slotted extrusion outlets on a conveyor, praying thin chocolate layers on the ice cream ribbons and cutting portions transversally to the multilayered strand.

Composite ice confections are known which consist of an ice cream combined with a biscuit or a crisp wafer, in particular of the type such as cakes, bars and cones, cigars or sandwiches made of wafer surrounding an ice cream or filled with ice cream. These products must include a system which makes the biscuit or the wafer impervious to the moisture coming from the ice cream, in order to prevent it from losing its crisp nature, either during storage or during comsumption. This is usually carried out by coating either the surface of the biscuit in contact with the ice cream, or the ice cream itself, with a fatty composition, for example with chocolate or with a coating containing chocolate.

It has been suggested, e.g. in USP 3,508,926, to reuse crumb or ground baked biscuit for secondary products, e.g. as inclusions in ice cream bulk. The problem to solve was that the baked food particles lost their crispness in the presence of water coming from the ice cream. In this baked food material the starch is gelatinized in the baking process. In order to solve the problem of high water absortivity of particles of food material containing gelatinized starch, it was suggested to mix the particles of food material with a mixture of a shortening and emulsifier, then to prewet them, preferably with a sugar sirup and to finally dry them. The resulting crunch could be used as inclusion in ice cream bulk.

### Summary of the invention

In accordance with the present invention there is provided a mass that looks like a biscuit at 0° C or below, which is liquid from 15° C or above and which can be extruded together with ice confectionery while keeping its biscuit-like consistency on storage and comsumption.

The invention also concerns a process for the production of the above product, which comprises reducing a biscuit or biscuit crumbs in particle size, as by comminution, crushing or grinding, to a particulate form, such as granular or powdered form and admixing the particles with a fat at a temperature comprised between 0° C and 30° C to form a homogeneous mass.

The invention also concerns a frozen confection comprising coextruded ice confectionery and biscuit-like mass.

The invention further concerns a process for the production of a composite frozen confection, which comprises pumping the biscuit-like mass at a temperature of 5 to 30° C and co-extruding the biscuit-like mass together with ice confectionery.

### Detailed description of the invention

Preferably, the biscuit-like mass of the invention comprises a mixture of particles of baked biscuit, preferably of butter-flavored baked biscuit and a high oleic partially hydrogenated vegetable oil.

Preferably, the mixture contains 40 to 60 % by weight of biscuit particles and 60 to 40 % by weight of fat.

The fat preferably has a solid fat content of about 19 % at 10° C and about 2 % at 21° C.

Thus, a preferred product of the invention is liquid and pumpable at about 8 to 15°C and has a plastic consistency at ice confectionery extrusion temperature of about -5° C to -6°C, which allows it to be coextruded with ice confectionery.

For carrying out the process for manufacturing the biscuit-like mass, a biscuit or biscuit crumbs is reduced by comminution, crushing or grinding, to a particulate form, such as granular or powdered form.

Biscuit powder, preferably containing more than 97 % by weight dry matter may be used alone or combined with other type of dry powder ingredients selected from the group consisting of cocoa, cereal, preferably rice, milk, nuts or coffee. In the case of cocoa, cereal, milk in an amount of non biscuit powder representing preferably from 1 to 50 % by weight of the powders and in the case of nuts and coffee representing preferably from 0.5 to 15 % by weight of the powders.

The particles are then admixed with a fat at a temperature comprised between 0° C and 30° C to form a homogeneous mass.

The fat as employed herein refers to partially hydrogenated vegetable oil, e.g. vegetable oils commonly used in food such as cottonseed or soybean oil, unmodified coconut fat, fractionated palm oil, fractionated milk fat and mixtures of such fats. Any vegetable fat with the required melting characteristics as outlined hereinbefore can be used with similar results in the context of the invention.

Dry sugar, e.g. saccharose, fructose, dextrose, glucose may be added for taste and texture in an amount representing up to 30 % by weight of the whole biscuit-like mass.

Salt and spices may be added, depending on the perception expected.
Natural or artificial flavours and colours may be added, depending on the perception expected.

The composite products of the invention comprise alternate layers or zones of biscuit-like material and ice confectionery.

In the present context of the invention, ice confectionery is an aerated ice composition, for example aerated ice cream, sherbet or sorbet or ice yogurt having a soft texture which is extruded. Aeration may be at an overrun of between 40 and 150 %, and preferably at 80 to 120 % overrun. The confectionery composition flowing through the extruder may consist of distinct ice cream, sherbet or sorbet or ice yogurt of different colour and perfumes which may be co-extruded and may contain syrups or sauces or small inclusion particles so as to produce a composite or marbled or spotted body of substantial soft texture.

In addition to the contrasted ice confectionery and biscuit-like layers or zones, the composite products may contain layers or zones of additional material such as thin layers of fat-based crispy material, preferably chocolate or confectionery coating.

### Brief description of the drawings

The invention will be further illustrated by the following description of preferred embodiments with reference to the drawings in which:
FIG. 1 schematically illustrates the preparation of a layered ice cream cake,
FIG. 2 is a schematical representation in perspective of a composite ice cream cake product on a tray manufactured as shown in FIG. 1,
FIG. 3 schematically illustrates the preparation of a composite ice cream stick and
FIG. 4 illustrates a schematical view in perspective and partly in cross-section of a composite ice cream stick product manufactured as shown in FIG. 3.

### Detailed description of preferred embodiments and examples

In the following examples, parts and percentages are by weight unless otherwise specified.

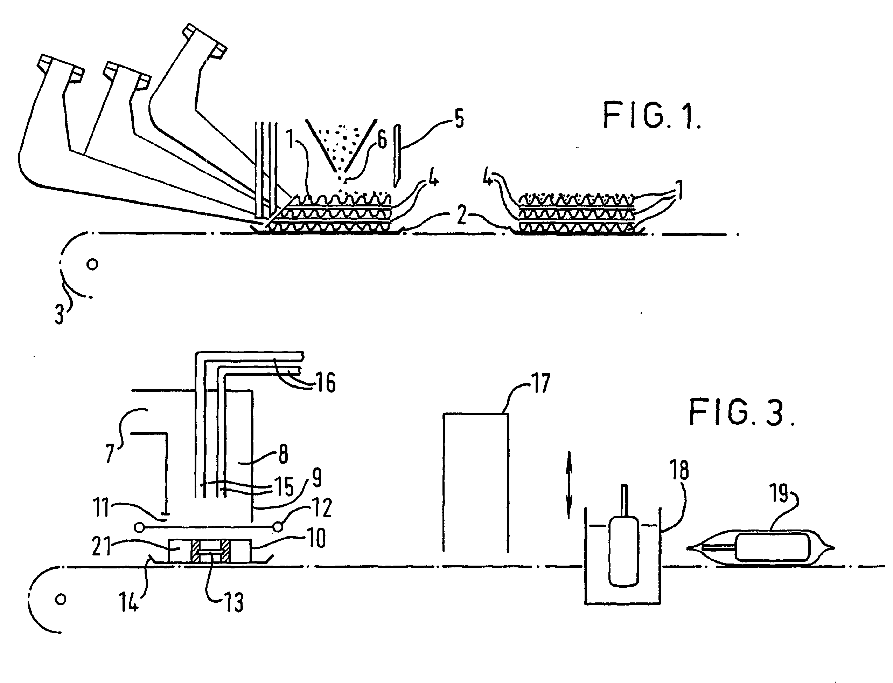

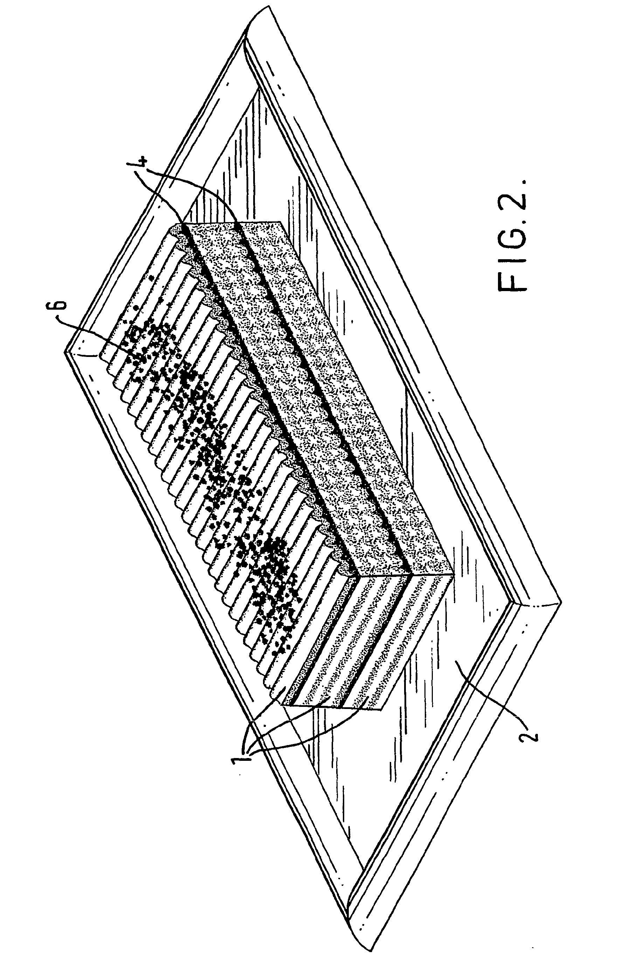

### Figures 1 and 2, Example 1

In this embodiment, a layered ice cream cake is prepared.

A vanilla flavoured ice cream mix containing milk solids, emulsifier, vegetable fat, butter, sugar syrup and glucose of about 37 % solids is processed in a freezer to an aerated ice cream of 90 % overrun which is extruded at -6° C.

Separately, 54.5 % butter flavoured and sugar-containing comminuted short bread biscuit crumbs and 45.5 % partially hydrogenated vegetable fat (DURKEX 500) are thoroughly mixed at 20° C to a homogeneous biscuit mass which is liquid and pumpable and which is fed to extrusion dies in slot shape.

The ice cream is extruded in multiple layers 1 on paper or cardboard trays 2 supported by a conveyor 3 underlaying a multiple extrusion die comprising as many extrusion horizontal slots of the breadth of the cake as layers (non represented). Between the ice cream layers 1, biscuit-like layers 4 are co-extruded at a temperature of about 15° C. In this product, the extrusion speed of biscuit-like layers 4 is about the same as the speed of conveyor 3, whereas the extrusion speed of the ice cream layers 1 is about twice that of conveyor 3, which produces wave-like ice cream extrudates 1 with interlayered biscuit-like flat layers 4. The multiple layer extrudate strand is then cut in portions by a revolving knife 5, packed and stored in cold store at - 30° C. The cake as shown in FIG. 2 has thus wave-like ice cream layers 1 and flat biscuit-like layers 4 and it is decorated at the top with biscuit crumbs 6.

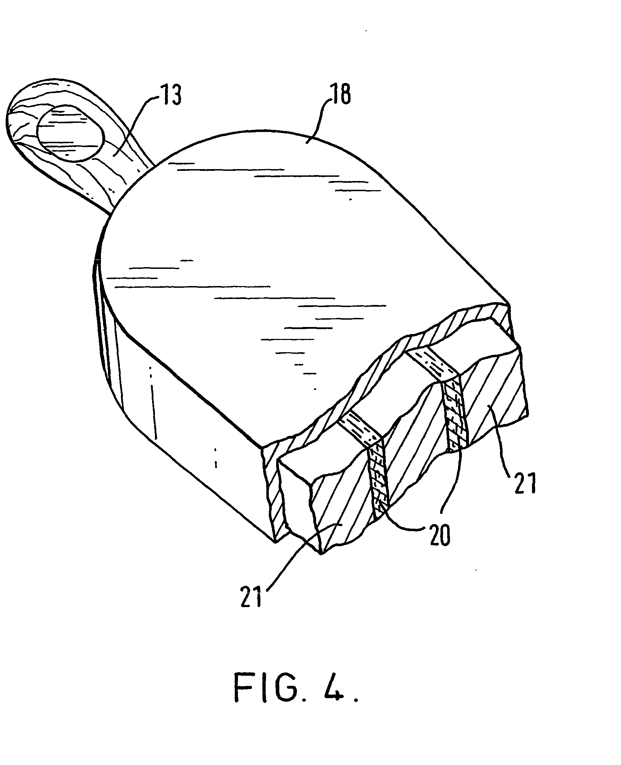

### Figures 3 and 4, Example 2

In this embodiment, a composite extruded stick ice cream is prepared.
A vanilla flavoured ice cream mix containing milk solids, emulsifier, vegetable fat, butter, sugar syrup and glucose of about 37 % solids is processed in a freezer to an aerated ice cream of 90 % overrun which is extruded at -6° C.

Separately, 54.5 % butter flavoured and sugar-containing comminuted short bread biscuit crumbs and 45.5 % partially hydrogenated vegetable fat (DURKEX 500) are thoroughly mixed at 20° C to a homogeneous biscuit mass which is liquid and pumpable.

The aerated ice cream mass 7 is pumped through a former 8 and vertically extruded. In the extrusion line, the former gives the shape to the cross-section of the product, depending on the shape of the extrusion die 9. A slab 10 is cut out of the extruded strand 11 by means of a conventional hot wire cutter 12. A stick 13 is inserted laterally into the cut slab 10, the cutter timing determining the thickness of the product, and the product is evacuated to further processing by the underlaying plate conveyor 14. Slot nozzles 15 are located with the former 7 and the biscuit mass is pumped through pipes 16 and co-extruded with the ice cream strand.

Further processing means travelling the sticked slab through a cooling tunnel 17, where the sticked slabs are hardened in the tunner 17 at about - 40° C, enrobing the cooled article with a confectionery coating of temperature of about 42-43° C by dipping in a bath 18 and wrapping the coated stick-bar in a flow-pack operation 19. The product is then stored in cold store at -30° C. As shown in FIG. 4, the stick-bar has internal stripes 20 of biscuit-like texture which confer a contrasting sensation in comparison to smoothness of the ice cream mass 21 upon consumption.

## Claims

1. Biscuit-like mass that looks like a biscuit at 0° C or below, which is liquid from 15° C or above and which can be extruded together with ice confectionery while keeping its biscuit-like consistency on storage and comsumption, which comprises a mixture of particles of baked biscuit and a fat.

2. Biscuit-like mass according to claim 1, in which the fat is a high oleic partially hydrogenated vegetable oil.

3. Biscuit-like mass according to claim 1, wherein the mixture contains 40 to 60 % by weight of biscuit particles and 60 to 40 % by weight of fat.

4. Biscuit-like mass according to claim 1, wherein the fat has a solid fat content of about 19 % at 10° C and about 2 % at 21° C.

5. Biscuit-like mass according to claim 1, which is liquid and pumpable at about 8 to 15 °C and has a plastic consistency at ice confectionery extrusion temperature of about -5° C to -6°C, which allows it to be coextruded with ice confectionery.

6. Composite frozen confection which comprises alternate layers or zones of biscuit-like material according to claims 1 to 5 and ice confectionery.

7. Composite frozen confection according to claim 6 in which ice confectionery is an aerated ice composition, aerated ice cream, sherbet or sorbet or ice yogurt having a soft texture which is extruded.

8. Composite frozen confection according to claim 7 in which aeration is at an overrun of between 40 and 150 %, and preferably at 80 to 120 % overrun.

9. Composite frozen confection according to claim 6 in which the composition flowing through the extruder consists of distinct ice cream, sherbet or sorbet or ice yogurt of different colour and perfumes which are co-extruded and may contain syrups or sauces or small inclusion particles so as to produce a composite or marbled or spotted body of substantial soft texture.

10. Composite frozen confection according to claim 6 which conprises in addition to the contrasted ice confectionery and biscuit-like layers or zones, layers or zones of additional material such as thin layers of fat-based crispy material, preferably chocolate or confectionery coating.

11. Composite frozen confection according to anyone of claims 6 to 10 in the form of a cake, a bulk, a portion, a sandwich or a stick-bar.

12. Process for the production of a composite frozen confection, which comprises reducing a biscuit or biscuit crumbs by comminution, crushing or grinding, to a particulate form, such as granular or powdered form, admixing the particles with a fat at a temperature comprised between 0° C and 30° C to form a homogeneous mass, pumping the biscuit-like mass at a temperature of 5 to 30° C and co-extruding the biscuit-like mass together with ice confectionery.

## Patentansprüche

1. Keksähnliche Masse, die wie ein Keks bei 0° C oder niedriger ausschaut, welche flüssig bei 15° C oder darüber ist und welche zusammen mit Eiskonfekt extrudiert werden kann, während sie ihre keksähnliche Konsistenz bei der Lagerung und dem Verzehr beibehält, welche ein Mischung aus Partikeln von gebackenem Keks und einem Fett beinhaltet.

2. Keksähnliche Masse gemäß Anspruch 1, in der das Fett ein teilgehärtetes, pflanzliches Öl mit einem hohen Ölsäureanteil ist.

3. Keksähnliche Masse gemäß Anspruch 1, in der die Mischung 40 bis 60 Gewichts-% Kekspartikel und 60 bis 40 Gewichts-% Fett enthält.

4. Keksähnliche Masse gemäß Anspruch 1, in der das Fett einen Gehalt an festem Fett von etwa 19 % bei 10° C und etwa 2 % bei 21° C aufweist.

5. Keksähnliche Masse gemäß Anspruch 1, welche flüssig und bei etwa 8 bis 15 °C pumpfähig ist und eine plastische Konsistenz bei der Eiskonfekt-Extrusionstemperatur von etwa -5° C bis -6° C aufweist, was das Koextrudieren mit Eiskonfekt gestattet.

6. Zusammengesetztes, gefrorenes Konfekt, welches aufeinander folgende Schichten oder Zonen aus keksähnlichem Material gemäß den Ansprüchen 1 bis 5 und Eiskonfekt umfasst.

7. Zusammengesetztes, gefrorenes Konfekt gemäß Anspruch 6, in dem das Eiskonfekt eine mit Luft versetzte Eiszusammensetzung, mit Luft versetztes Speiseeis, Fruchteis oder Sorbet oder Yoghurteis mit einer weichen Struktur ist, welches extrudiert ist.

8. Zusammengesetztes, gefrorenes Konfekt gemäß Anspruch 7, in der der Luftzuschlag zu einer Volumensteigerung von zwischen 40 und 150 %, und bevorzugt 80 bis 120 % geführt hat.

9. Zusammengesetztes, gefrorenes Konfekt gemäß Anspruch 6, in der sich die Zusammensetzung, die durch den Extruder strömt, aus unterscheidbarem Speiseeis, Fruchteis oder Sorbet oder Yoghurteis mit unterschiedlicher Farbe und Duftstoffen zusammensetzt, welche koextrudiert werden und Sirups oder Saucen oder kleine eingeschlossene Partikel enthalten kann, um so einen zusammengesetzten oder marmorierten oder gefleckten Körper mit im Wesentlichen weicher Struktur zu erzeugen.

10. Zusammengesetztes, gefrorenes Konfekt gemäß Anspruch 6, welches, zusätzlich zu den im Kontrast zueinander stehenden Eiskonfekt- und keksähnlichen Schichten oder Zonen, Schichten oder Zonen zusätzlichen Materials, wie dünner Schichten aus fettbasiertem, knusprigem Material, bevorzugt Schokolade oder Konfektbeschichtung enthält.

11. Zusammengesetztes, gefrorenes Konfekt gemäß einem der Ansprüche 6 bis 10, in der Form eines Kuchens, einer Masse, einer Portion eines Sandwichs oder eines mit Stiel versehenen Stabs.

12. Verfahren zur Herstellung eines zusammengesetzten, gefrorenen Konfekts, welches Verfahren umfasst: Verkleinern eines Keks oder Kekskrümel durch Feinstvermahlung, Brechen oder Mahlen in eine partikelförmige Form, wie in granulat- oder pulverförmige Form, Beimischen eines Fettes bei einer zwischen 0°C und 30°C liegenden Temperatur zu den Partikeln, um eine homogene Masse zu bilden, Pumpen der keksähnlichen Masse bei einer Temperatur von 5 bis 30° C und Koextrudieren der keksähnlichen Masse zusammen mit dem Eiskonfekt.

## Revendications

1. Masse de type biscuit ressemblant à un biscuit à 0°C ou moins, qui est liquide à partir de 15°C ou plus et qui peut être extrudée conjointement avec une sucrerie glacée tout en conservant sa consistance de type biscuit lors du stockage et de la consommation, qui comprend un mélange de particules de biscuit cuit et d'une matière grasse.

2. Masse de type biscuit selon la revendication 1, dans laquelle la matière grasse est une huile végétale hautement oléique partiellement hydrogénée.

3. Masse de type biscuit selon la revendication 1, dans laquelle le mélange contient 40 à 60 % en poids de particules de biscuit et 60 à 40 % en poids de matière grasse.

4. Masse de type biscuit selon la revendication 1, dans laquelle la matière grasse a une teneur en matière grasse solide d'environ 19 % à 10°C et d'environ 2 % à 21°C.

5. Masse de type biscuit selon la revendication 1, qui est liquide et pompable entre environ 8 et 15°C et a une consistance plastique à la température d'extrusion des sucreries glacées entre environ -5°C et -6°C, qui lui permet d'être coextrudée avec une sucrerie glacée.

6. Confiserie composite gelée, qui comprend des couches ou des zones alternées de matière de type biscuit, selon les revendications 1 à 5, et de sucrerie glacée.

7. Confiserie gelée composite selon la revendication 6, dans laquelle la sucrerie glacée est une composition glacée aérée, une crème glacée aérée, une glace, un sorbet ou un yaourt glacé ayant une texture lisse qui est extrudée.

8. Confiserie gelée composite selon la revendication 7, dans laquelle l'aération est à un foisonnement compris entre 40 et 150 %, et de préférence entre 80 et 120 % de foisonnement.

9. Confiserie composite gelée selon la revendication 6, dans laquelle la composition circulant à travers l'extrudeuse est constituée de crème glacée, de glace, de sorbet ou de yaourt glacé de couleurs et parfums différents qui est coextrudée et peut contenir des sirops ou des sauces ou de petites particules d'inclusion de façon à produire un corps composite, marbré ou taché de texture sensiblement lisse.

10. Confiserie composite gelée selon la revendication 6, qui comprend en plus de la sucrerie glacée contrastée et des couches ou des zones de type biscuit, des couches ou des zones de matière supplémentaire telles que des couches minces de matière soufflée à base de matière grasse, de préférence un enrobage en chocolat ou en sucrerie.

11. Confiserie composite gelée selon l'une quelconque des revendications 6 à 10, sous la forme d'un gâteau, d'un bloc, d'une portion, d'un sandwich ou d'une barre.

12. Processus de production d'une confiserie composite gelée, qui comprend la réduction d'un biscuit ou de miettes de biscuit par fragmentation, concassage ou broyage, sous une forme particulaire, telle qu'une forme granulaire ou pulvérulente, le mélange des particules avec une matière grasse à une température comprise entre 0°C et 30°C pour former une masse homogène, le pompage de la masse de type biscuit à une température comprise entre 5 et 30°C et la co-extrusion de la masse de type biscuit conjointement avec la sucrerie glacée.
